# EUROPÄISCHE PATENTANMELDUNG

(11) **EP 1 286 403 A2**
(43) Veröffentlichungstag der Anmeldung: **26.02.2003**
(21) Anmeldenummer: 02017445.4
(22) Anmeldetag: 03.08.2002
(51) Int. Cl.: H01M 2/16, H01M 2/18

(54) **Batterieseparatoren**

(30) Priorität: 23.08.2001 DE 10141410
(71) Anmelder: Johns Manville Europe GmbH, 61352 Bad Homburg v.d.H. (DE)
(72) Erfinder: Plötz, Kurt, 65529 Waldems (DE)
(74) Vertreter: Luderschmidt, Schüler & Partner GbR

(57) **Zusammenfassung**

Es wird ein Batterieseparator beschrieben, der ein mittels Nadelung vorverfestigtes und mittels eines Kalanders kalibriertes Vlies umfaßt, das mit einem säurebeständigen Binder endverfestigt ist. Die Batterieseparatoren weisen eine gleichmäßige Dicke auf, sind nicht haarig und können vielseitig verwendet werden, insbesondere auch als Röhrentaschen.

## Beschreibung

Die Erfindung betrifft Batterieseparatoren, Verfahren zu deren Herstellung sowie die Verwendung derselben in Batterien, Bleiakkumulatoren und dergleichen.

Batterien, insbesondere die Naßzellen-Batterien, sind seit langem bekannt. Sie enthalten abwechselnd angeordnete positive und negative Batterieelektroden, zwischen denen zur Verhinderung des physischen Kontaktes Separatoren angeordnet sind. Diese Batterieseparatoren werden aus chemisch beständigem Material hergestellt, sie sollen außer einer ausreichenden mechanischen Festigkeit und einer chemischen Beständigkeit auch eine ausreichende Durchgängigkeit für den Elektrolyten bzw. die Elektrolytionen besitzen, d.h. eine entsprechende Porosität besitzen.

Die Separatoren werden in Form von Folien, Membranen, Laminaten, Geweben, aber auch in Vliesform als sog. non-wovens hergestellt. Es gibt zahlreiche Patentschriften und wissenschaftliche Veröffentlichungen, die derartige Materialien beschreiben und Zeugnis abgeben über die Versuche, insbesondere die chemische Beständigkeit dieser Stoffe zu verbessern und die Effizienz und Betriebsdauer der Batterien mit derartigen Batterieseparatoren zu verbessern.

So wird in der US-PS 5,935,884 die Herstellung eines Batterieseparators auf Basis eines naßgelegten Nylonstapelfaservlieses beschrieben. Dabei werden Polyamid-6,6-Stapelfasern zusammen mit Polyamid-6-Binderfasern auf einer Papiermaschine im Naßverfahren zu einem Vlies verarbeitet. Mittels eines Infrarotstrahlers wird das Vlies dann teilweise gebunden, anschließend wird getrocknet. Das Vlies mit den teilweise gebundenen Fasern wird sodann über erhitzte Kalanderrollen geführt.

Das Herstellungsverfahren ist ziemlich kompliziert und benötigt insbesondere bei der Vliesherstellung beim Naßverfahren eine ganze Reihe von Chemikalien, was insbesondere aus Umweltgründen von Nachteil ist.

In der WO 98/58111 wird ein Laminat beschrieben, das als Batterieseparator eingesetzt werden kann. Bei diesem Laminat handelt es sich um ein Produkt, das aus zwei Schichten besteht, nämlich aus einer Schicht aus gesponnenen Fasern und einer Schicht aus sog. melt-blown-Fasern. Die beiden Schichten werden mittels einer Copolymerisationsreaktion mit Vinylmonomeren verfestigt. Auch diese Herstellungsweise ist kompliziert, da erstens zwei sehr unterschiedliche Schichten zusammengebracht werden müssen und ferner eine Pfropfpolymerisation stattfindet, die sehr genau kontrolliert werden muß.

In der EP 0 109 619 B 1 werden Batterieseparatoren beschrieben, die auf Basis von feinen und groben Faserabschnitten hergestellt worden sind. Auch diese Herstellungsweise ist ziemlich kompliziert, insbesondere auch weil zur Herstellung der unterschiedlichen Durchmesser ein komplizierter Verstreckungsmechanismus kontrolliert werden muß.

In der US-PS 6,120,939 werden ebenfalls Batterieseparatoren beschrieben, die auf Basis eines Vlieses aus ultrafeinen Fasern aufgebaut sind. Auch hier wird das sog. melt-blown-Verfahren eingesetzt, das ebenfalls kompliziert ist und zu Fasern mit unregelmäßigen Durchmessern führt.

Es sind auch Batterieseparatoren auf Basis von Vliesen aus Polyesterfilamenten bekannt, zum Beispiel die unter der Handelsbezeichnung "Type 021" bei Johns Manville Sales GmbH, Bad Homburg/Deutschland, kommerziell erhältlichen Produkte. Dabei handelt es sich um Batterieseparatoren, die in Form sog. Röhrentaschen zum Einsatz gelangen. Die Röhrentaschen werden mit Elektrodenmaterial gefüllt und in den Elektrolyten der Batterie eingestellt.

Bei den Polyestervliesen handelt es sich um Endlosfilamentvliese, die mittels eines Prägekalanders vorverfestigt sind und anschließend mittels eines Acrylatbinders endverfestigt werden.

In einem separaten Arbeitsgang erfolgt dann die Herstellung der Röhrentaschen. Dabei werden zwei Vliesbahnen bzw. Vliese aufeinandergelegt und zu regelmäßigen Abständen miteinander vernäht. Durch das Einführen von geheizten Stäben wird dann die Röhrchenform (zum Beispiel rund, quadratisch oder rechteckig) erzeugt.

Die Vliese sind aufgrund ihrer Festigkeit und Struktur für den Einsatz als Batterieseparatoren gut geeignet, weisen jedoch den Nachteil der nicht beliebig einstellbaren Vliesdicke auf und verfügen außerdem eine durch die Prägung hervorgerufene verringerte Nutzfläche. Im Bereich der Prägepunkte ist der Vliesstoff stark verdichtet, und deshalb ist dort keine Porosität gegeben. Ferner können diese Batterieseparatoren eine nicht erwünschte Haarigkeit aufweisen.

Es ist zwar möglich die Kalandrierung ohne Prägung durchzuführen, man erhält dann geringe Vliesdicken und auch eine akzeptable Porosität; die so hergestellten Vliese weisen jedoch eine deutlich stärkere Haarigkeit der Oberfläche auf und lassen bezüglich der Delaminierungsfestigkeit zu wünschen übrig.

Obwohl bereits eine ganze Reihe von Verfahren zur Herstellung von Batterieseparatoren, insbesondere auf Basis von Vliesen, bekannt ist, besteht noch ein Bedürfnis nach verbesserten Batterieseparatoren und verbesserten Verfahren zu deren Herstellung.

Aufgabe der Erfindung ist es, Batterieseparatoren zur Verfügung zu stellen, die nach einem einfachen und reproduzierbar arbeitenden Verfahren hergestellt werden können, die eine gute mechanische Festigkeit und eine gute chemische Beständigkeit aufweisen und die eine zufriedenstellende Durchlässigkeit für Elektrolyten aufweisen, die mit möglichst gleichbleibender Dicke hergestellt werden können, die das Herstellen von Batterien mit großen Kapazitäten erlauben und die vor allem auch eine Haarigkeit der Oberfläche, wie das bei Batterieseparatoren auf Basis von Fasern häufig der Fall ist, nicht besitzen und die im übrigen vielseitig verwendbar sind.

Diese Aufgabe wird gelöst durch einen Batterieseparator umfassend ein mittels Nadelung vorverfestigtes und mittels eines Kalanders kalibriertes Vlies, das mit einem säurebeständigen Binder endverfestigt ist.

Das Vlies ist vorzugsweise ein Polyestervlies, vorteilhaft ein Vlies aus manganfreien Polyesterfasern. Bevorzugt besteht das Vlies aus Endlosfasern, insbesondere liegt das Vlies als ein Spinnvlies (spunbonded) vor.

Es ist vorteilhaft, wenn das Flächengewicht des Vlieses einschließlich Binder 80 bis 180 g/m², insbesondere 100 bis 150 g/m², ist.

Das Vlies ist vorteilhafterweise mit einer Stichdichte von 30 bis 60 Stichen/cm² genadelt.

Der säurebeständige Binder ist vorzugsweise ein Acrylatbinder. Sehr gut geeignet sind beispielsweise wäßrige Dispersionen eines thermoplastischen Acrylpolymers auf Basis von Methylmethacrylat, wie sie zum Beispiel von der Firma Polymer Latex GmbH und Co. KG, D-45764 Marl, unter dem Namen Plextol M 630 vertrieben werden. Das Vlies enthält vorzugsweise 10 bis 25 Gew.-% Acrylatbinder (Trockengewicht Binder). Das Vlies ist vorzugsweise mit einem Kalander einer Temperatur von 170 bis 200°C kalibriert worden.

In einer besonders vorteilhaften Ausführungsform der Erfindung ist der Separator in Form einer Röhrentasche konfektioniert.

Ein weiterer Gegenstand der Erfindung ist ein Verfahren zur Herstellung von Batterieseparatoren, das dadurch gekennzeichnet ist, daß man ein Endlosfilamentvlies durch Verspinnen von Polymeren, insbesondere Polyestermaterial wie Polyethylenterephthalat, herstellt, das Vlies mittels Nadeln vorverfestigt, das so vorverfestigte Vlies mittels eines Kalanders kalibriert und sodann mit einem säurebeständigen Binder endverfestigt.

Vorzugsweise wird mit einem Kalander einer Temperatur von 170 bis 200°C kalibriert. Es ist vorteilhaft, wenn man mit einer Stichdichte von 40 bis 60 Stichen pro cm² nadelt. Als säurebeständiger Binder ist besonders ein vemetzender Acrylatbinder geeignet.

Die Batterieseparatoren gemäß der Erfindung lassen sich besonders vorteilhaft in Bleiakkumulatoren einsetzen.

Die Herstellung der Batterieseparatoren gemäß der Erfindung kann auf folgende Weise geschehen.

Zunächst wird ein Vlies, vorzugsweise aus Polyesterfilamenten, hergestellt, wie es zum Beispiel in der DE-OS 24 60 755 beschrieben wird (sog. spunbonds). Als Polyester wird vorzugsweise Polyethylenterephthalat verwendet; der Einsatz von Copolyestern ist jedoch möglich.

Bei dem spunbond-Verfahren werden kontinuierlich Filamente auf ein sich bewegendes Band abgelegt. Zum Erzielen einer guten Gleichmäßigkeit werden vorteilhafterweise bei der Vliesherstellung möglichst viele Ablagereihen (Spinnbalken) verwendet.

Besonders vorteilhaft werden zur Herstellung der Filamente Polymere, insbesondere Polyethylenterephthalat, eingesetzt, die keine oder nur vernachlässigbare Mengen an Metallen enthalten.

Die Metalle, die in Form von chemischen Verbindungen vorliegen, gelangen in das Polymer bzw. in den Polyester, weil bei der Umesterung bzw. Polykondensation metallhaltige Katalysatoren eingesetzt werden. Da Metalle, wie zum Beispiel Mangan, zu den sog. Batteriegiften zählen, ist es wichtig, Rohstoffe zu verwenden, bei denen diese Metalle nicht in den Katalysatoren enthalten sind. Es ist besonders vorteilhaft, Polyethylenterephthalat einzusetzen, das keine Manganverbindungen enthält.

Die erhaltenen Vliese werden sodann mechanisch mittels Vernadeln vorverfestigt. Hierzu werden 36er-38er CB-Nadeln verwendet, vorteilhaft 38er CB-Nadeln. Das derart vorverfestigte Vlies wird sodann mittels eines Glattkalanders kalibriert. Mit Hilfe des Kalanders wird die erwünschte Dicke des Vlieses eingestellt. Die Dicke kann an sich innerhalb weiter Grenzen variiert werden und hängt von den Erfordernissen des späteren Einsatzes ab. Im allgemeinen liegt die durch die Kalandrierung eingestellte Dicke jedoch unter 0,8 mm, insbesondere 0,5 bis 0,7 mm. Es ist vorteilhaft, wenn die Temperatur des Kalanders mindestens 170°C, vorzugsweise mindestens 180°C beträgt, vorzugsweise 180° bis 200°C.

Nach der Kalandrierung erfolgt die Zugabe des säurefesten Binders. Der Binder wird im allgemeinen in der Weise aufgebracht, indem das Vlies durch ein binderhaltiges Bad geführt wird. Hierbei eignen sich besonders sog. Tauchfoulards. Nach Verlassen des Bades wird der Überschuß abgequetscht. Geeignete Bindersysteme sind säurebeständige sog. "Thermoset"-Binder, insbesondere vernetzende Acrylatbinder, wie die bereits weiter oben zitierten Dispersionen.

Der Binderauftrag muß ausreichend hoch sein, um die erforderlichen Festigkeiten und Steifigkeit zu gewährleisten. Andererseits sollte der Bindergehalt auch nicht zu hoch sein, da sonst die Porosität des Separators reduziert wird und die Herstellkosten unnötig ansteigen. Im allgemeinen hat sich ein Binderauftrag von 5 bis 25 Gew.-% als sehr geeignet erwiesen. Im übrigen kann der Durchschnittsfachmann die geeignetste Menge an Binder durch einfache Vorversuche ohne Schwierigkeiten ermitteln.

Die Verfestigung nach dem Binderauftrag erfolgt in der Wärme, z.B. in einem Ofen, wobei der Binder trocknet. Dem eigentlichen Verfestigungsvorgang kann auch ein separater Trocknungsvorgang vorgeschaltet werden.

Nach Abschluß der Verfestigung kann das Vlies in an sich bekannter Weise konfektioniert werden, d.h. zum Beispiel zu planen Stücken, welche zwischen glatten Akkumulatoren eingesetzt werden, oder vorteilhaft zu Röhrentaschen konfektioniert werden. Dies erfolgt in einem separaten Arbeitsgang. Dabei werden zwei Vliesbahnen bzw. Vliese aufeinandergelegt und zu regelmäßigen Abständen miteinander vernäht. Durch das Einführen von geheizten Stäben wird dann die Röhrchenform (zum Beispiel rund, quadratisch oder rechteckig) erzeugt.

Es war besonders überraschend, daß es gemäß der Erfindung möglich ist, Batterieseparatoren zur Verfügung zu stellen, die sich einfach und auf unkomplizierte Weise herstellen lassen, die eine gleichmäßige Dicke aufweisen und insbesondere eine ausreichende Porosität besitzen.

Es war besonders überraschend, daß es mit der Erfindung möglich ist, Batterieseparatoren auf Vliesbasis herzustellen, die keine Haarigkeit mehr besitzen bzw. nur noch in untergeordnetem und vernachlässigbarem Maße.

Die mechanische Festigkeit der Batterieseparatoren ist hervorragend, die chemische Beständigkeit, insbesondere gegenüber Säuren wie Schwefelsäuren oder Salzlösungen, ist ausgezeichnet. Der Delaminierungswiderstand ist hervorragend.

Die Erfindung wird durch das folgende Beispiel näher erläutert.

### Beispiel

Es wird ein Endlosfilamentvlies aus Polyethylenterephthalat hergestellt. Die Vliese werden, entsprechend den bekannten Spunbond-Verfahren, durch Ablage von kontinuierlichen gesponnenen Filamenten auf ein sich bewegendes Band hergestellt. Durch Verwendung von 9 Spinnbalken werden Vliese mit einem Flächengewicht einschließlich Binder von 147 g/m² errreicht. Ohne weitere Verfestigung erfolgt anschließend die Nadelung mit einer Nadelungsdichte von 36 Stichen/cm². Die dann folgende Kalibrierung der Vliesdicke erfolgt durch einen Kalander bei 200°C. Der Binderauftrag von 16,6 % erfolgt mittels eines Tauchfoulards. Der eingesetzte Binder ist ein kommerzieller Acrylatbinder.

Das erhaltene vernadelte und endverfestigte Vlies wird auf an sich bekannte Weise zu einem Batterieseparator konfektioniert.

**Tabelle 1**

| | Type 021/150 | Neuer Vliesstoff |
|---|---|---|
| Flächengewicht [g/cm²] | 149 | 147 |
| Dicke [mm] | 0,67 | 0,62 |
| Höchstzugkraft [N/5 cm] (l/q) | 504/358 | 573/324 |
| Höchstzugkraftdehnung [%] | 24,7/23,3 | 27,2/32,0 |
| Weiterreißfestigkeit [N] (l/q) | 157/172 | 202/228 |
| Delaminierung [N/5 cm] | 4,8 | 32,4 |
| Luftdurchlässigkeit [l/m² sec] | 1085 | 1153 |

## Patentansprüche

1. Batterieseparator umfassend ein mittels Nadelung vorverfestigtes und mittels eines Kalanders kalibriertes Vlies, das mit einem säurebeständigen Binder endverfestigt ist.

2. Batterieseparator nach Anspruch 1, **dadurch gekennzeichnet, daß** das Vlies ein Polyestervlies ist.

3. Batterieseparator nach Anspruch 2, **dadurch gekennzeichnet, daß** das Vlies aus manganfreien Polyesterfasern besteht.

4. Batterieseparator nach mindestens einem der Ansprüche 1 bis 3, **dadurch gekennzeichnet, daß** das Vlies aus Endlosfasern besteht.

5. Batterieseparator nach Anspruch 4, **dadurch gekennzeichnet, daß** das Vlies ein Spinnvlies ist (spunbonded).

6. Batterieseparator nach mindestens einem der Ansprüche 1 bis 5, **dadurch gekennzeichnet, daß** das Flächengewicht des Vlieses einschließlich Binder 80 bis 180 g/m² ist.

7. Batterieseparator nach Anspruch 6, **dadurch gekennzeichnet, daß** das Flächengewicht einschließlich Binder 100 bis 150 g/m² ist.

8. Batterieseparator nach mindestens einem der Ansprüche 1 bis 7, **dadurch gekennzeichnet, daß** das Vlies mit einer Stichdichte von 30 bis 60 Stichen pro cm² genadelt ist.

9. Batterieseparator nach mindestens einem der Ansprüche 1 bis 8, **dadurch gekennzeichnet, daß** das Vlies mit einem Acrylatbinder endverfestigt ist.

10. Batterieseparator nach Anspruch 9, **dadurch gekennzeichnet, daß** das Vlies 5 bis 25 Gew.-% Acrylatbinder enthält.

11. Batterieseparator nach mindestens einem der Ansprüche 1 bis 10, **dadurch gekennzeichnet, daß** das Vlies mit einem Kalander einer Temperatur von 170 bis 200°C kalibriert worden ist.

12. Batterieseparator nach mindestens einem der Ansprüche 1 bis 11, **dadurch gekennzeichnet, daß** der Batterieseparator in Form einer Röhrentasche konfektioniert ist.

13. Verfahren zur Herstellung von Batterieseparatoren, **dadurch gekennzeichnet, daß** man ein Endlosfilamentvlies durch Verspinnen von Polymeren herstellt, das Vlies mittels Nadeln vorverfestigt, das so vorverfestigte Vlies mittels eines Kalanders kalibriert und sodann mit einem säurebeständigen Binder endverfestigt.

14. Verfahren zur Herstellung von Batterieseparatoren nach Anspruch 13, **dadurch gekennzeichnet, daß** man ein Endlosfilamentvlies durch Verspinnen von Polyestermaterial herstellt, das Vlies mittels Nadeln vorverfestigt, das so vorverfestigte Vlies mittels eines Kalanders kalibriert und sodann mit einem säurebeständigen Binder endverfestigt.

15. Verfahren nach Anspruch 14, **dadurch gekennzeichnet**, Verfahren zur Herstellung von Batterieseparatoren, **dadurch gekennzeichnet, daß** man ein Endlosfilamentvlies durch Verspinnen von Polyethylenterepthalat herstellt, das Vlies mittels Nadeln vorverfestigt, das so vorverfestigte Vlies mittels eines Kalanders kalibriert und sodann mit einem säurebeständigen Binder endverfestigt.

16. Verfahren nach einem der Ansprüche 13 - 15, **dadurch gekennzeichnet, daß** man mittels eines Kalanders einer Temperatur von 170 bis 200°C kalibriert.

17. Verfahren nach mindestens einem der Ansprüche 13 bis 16, **dadurch gekennzeichnet, daß** man mit einer Stichdichte von 30 bis 60 Stichen pro cm² nadelt.

18. Verfahren nach mindestens einem der Ansprüche 13 bis 17, **dadurch gekennzeichnet, daß** man als säurebeständigen Binder einen vernetzenden Acrylatbinder verwendet.

19. Verwendung der Batterieseparatoren nach mindestens einem der Ansprüche 1 bis 12 oder hergestellt nach einem Verfahren nach mindestens einem der Ansprüche 13 bis 18 in Blei-Akkumulatoren.
